# FASCICULE DE BREVET EUROPEEN

(11) **EP 0 860 230 B1**
(45) Date de publication et mention de la délivrance du brevet: **22.10.2003**
(21) Numéro de dépôt: 98102349.2
(22) Date de dépôt: 11.02.1998
(51) Int. Cl.: B23K 26/06

(54) **Dispositif d'usinage laser, notamment pour l'usinage de bielles**
Laserbearbeitungsvorrichtung, insbesondere zur Bearbeitung von Pleuelstangen
Laser machining device, in particular for machining tie rods

(30) Priorité: 19.02.1997 EP 97102649
(43) Date de publication de la demande: 26.08.1998
(73) Titulaire: LASAG AG, CH-3600 Thun (CH)
(72) Inventeur: Von Niederhäusern, Rudolf, 3656 Tschingel (CH); Bünting, Gerard, CH-3604 Thun (CH)
(74) Mandataire: Balsters, Robert

(56) Documents cités:
- EP-A- 0 042 173
- EP-A- 0 130 749
- EP-A- 0 140 663
- EP-A- 0 868 245
- FR-A- 2 443 897
- GB-A- 2 207 378
- US-A- 3 524 046
- US-A- 4 083 629
- PATENT ABSTRACTS OF JAPAN vol. 010, no. 047 (M-456), 25 février 1986 & JP 60 199585 A (TOSHIBA KK), 9 octobre 1985,
- PATENT ABSTRACTS OF JAPAN vol. 011, no. 240 (E-529), 6 août 1987 & JP 62 052981 A (NIPPEI TOYAMA CORP), 7 mars 1987,

## Description

La présente invention concerne un dispositif d'usinage laser pouvant avantageusement être utilisé dans l'usinage de bielles pour la réalisation de moteurs. Le document US-A-3 524 046 décrit un tel dispositif.

Selon une technique utilisée pour la fabrication de bielles, les bielles sont formées dans un premier temps d'une seule et même pièce métallique présentant deux ouvertures traversantes, une première ouverture pour la fixation à un piston et une deuxième ouverture pour la fixation à l'arbre du moteur pour l'entraînement notamment d'un véhicule ayant un moteur à combustion. Cependant, afin de pouvoir agencer les bielles sur un arbre de transmission du mouvement mécanique des rotors en un mouvement rotatif des roues du véhicule, il est nécessaire de sectionner les bielles formées initialement d'une seule et même pièce au niveau de la deuxième ouverture prévue pour le passage dudit arbre de transmission.

Afin de sectionner les bielles selon un plan médian, c'est-à-dire un plan comprenant l'axe géométrique central de ladite deuxième ouverture, il est connu de l'homme du métier d'utiliser une tête laser mobile, notamment pivotable, pour usiner dans la paroi de la deuxième ouverture préalablement au sectionnement deux rainures transversales ou axiales, c'est-à-dire orientées selon la direction dudit axe géométrique central.

Dans une technique d'usinage laser connue, la tête laser est orientée premièrement pour l'usinage d'une première rainure, cet usinage étant effectué par un premier mouvement de translation de cette tête selon l'axe géométrique central de ladite deuxième ouverture. Ensuite, la tête laser est déplacée en subissant notamment une rotation pour être orientée de manière à pouvoir usiner une deuxième rainure dans la paroi de la deuxième ouverture qui soit diamétralement opposée à la première rainure. Finalement, par un deuxième mouvement de translation axial, cette deuxième rainure est usinée au moyen du faisceau laser fourni par la tête d'usinage laser.

Un tel procédé d'usinage de bielles pour effectuer un sectionnement de celles-ci présente des inconvénients et des limitations, notamment en ce qui concerne la rapidité d'usinage. Premièrement, du fait que la tête d'usinage doit être mobile et déplaçable en cours d'usinage pour pouvoir usiner les deux rainures diamétralement opposées dans la paroi intérieure de l'ouverture au niveau de laquelle le sectionnement est prévu, il est nécessaire de relier la tête d'usinage à la source engendrant le faisceau laser au moyen d'un câble optique souple. L'utilisation d'un câble optique pour la transmission du faisceau laser de la source laser à la tête d'usinage présente divers inconvénients et notamment des problèmes de focalisation du faisceau étant donné que le passage par le câble optique engendre une dispersion spatiale du faisceau laser relativement à la distribution spatiale du faisceau laser sortant de la source laser. Les problèmes de focalisation résultant de cette dispersion spatiale ont pour effet de diminuer l'efficacité d'usinage et d'augmenter ainsi la puissance laser nécessaire à l'usinage des rainures susmentionnées.

Deuxièmement, le déplacement de la tête d'usinage laser en cours d'usinage d'une bielle nécessite un agencement mécanique relativement complexe et de plus augmente le temps d'usinage de chaque bielle. Au minimum, avec un tel dispositif d'usinage, la tête d'usinage doit subir deux mouvements de translation axiale et au moins un mouvement de rotation. Dans le cas où l'usinage des rainures est effectué de préférence de haut en bas de manière à ce que la matière enlevée ne vienne pas remplir à nouveau la rainure, le nombre de mouvements de translation de la tête d'usinage est d'au moins trois.

Le but de la présente invention est de pallier les inconvénients mentionnés ci-dessus en fournissant un dispositif d'usinage laser permettant d'usiner avec une grande efficacité et une grande précision notamment des bielles pour moteurs avant sectionnement de celles-ci pour les monter sur un arbre de transmission.

A cet effet, la présente invention a pour objet un dispositif d'usinage laser tel que défini à la revendication 1 ci-jointe.

Le document EP-A-868245 faisant partie de l'état de la technique au sens de l'article 54(3) de la CBE décrit un dispositif comprenant un diviseur de faisceau et différant de la revendication 1 par la fait que les chemins optiques issus du diviseur de faisceau conduisent à des buses et non à des têtes d'usinage comme dans l'invention.

Grâce aux caractéristiques du dispositif d'usinage laser selon l'invention, deux faisceaux laser se propageant à la sortie des deux têtes d'usinage selon lesdits premier et deuxième axes optiques peuvent usiner simultanément deux rainures diamétralement opposées dans la paroi latérale intérieure d'une ouverture présentée par une pièce, notamment d'une ouverture de bielle, puisque les moyens de focalisation prévus sont agencés pour focaliser ces deux faisceaux laser secondaires au-delà du croisement des deux axes optiques.

Toutefois, on notera qu'il est possible, selon d'autres caractéristiques de l'invention qui seront décrites plus en détail ci-après, d'usiner les deux rainures l'une à la suite de l'autre sans avoir à déplacer les deux têtes d'usinage relativement au carter.

L'installation d'usinage pour bielle utilisant le dispositif d'usinage laser selon l'invention peut être agencée de manière que seuls des mouvements de translation verticaux du carter relativement aux pièces usinées soient prévus.

Bien évidemment, l'homme du métier comprendra que pour éviter l'utilisation d'un câble optique entre la source laser et le carter, la source laser peut être fixée à demeure à ce carter. Toutefois, l'homme du métier peut imaginer d'autres variantes de réalisation, notamment avec une source restant immobile alors que le carter et les têtes sont mobiles lors des diverses étapes d'usinage en utilisant des miroirs de renvoi définissant au moins partiellement un chemin optique vertical dont la longueur varie lors des mouvements de translation verticaux du carter. Cependant, dans certains cas et en particulier avec des bielles, ce sont les pièces usinées qui sont déplacées alors que le dispositif d'usinage laser selon l'invention reste immobile, aucune partie de ce dispositif n'ayant à subir un mouvement quelconque.

La présente invention sera décrite ci-après plus en détail à l'aide de la description suivante, faite en référence aux dessins annexés, donnés à titre d'exemples nullement limitatifs, dans lesquels :
- la figure 1 est une vue schématique de dessus partiellement ouverte d'un dispositif d'usinage laser selon un premier mode réalisation de l'invention;
- la figure 2 est une vue schématique partielle, de face et partiellement ouverte du dispositif représenté à la figure 1;
- la figure 3 montre schématiquement le dispositif des figures 1 et 2 utilisé dans une application d'usinage de bielles;
- la figure 4 est une vue schématique de dessus partiellement ouverte d'une variante du premier mode de réalisation;
- la figure 5 est une vue schématique de dessus partiellement ouverte d'un deuxième mode de réalisation d'un dispositif selon l'invention, et
- la figure 6 est une vue schématique de dessus partiellement ouverte d'une variante du deuxième mode de réalisation.

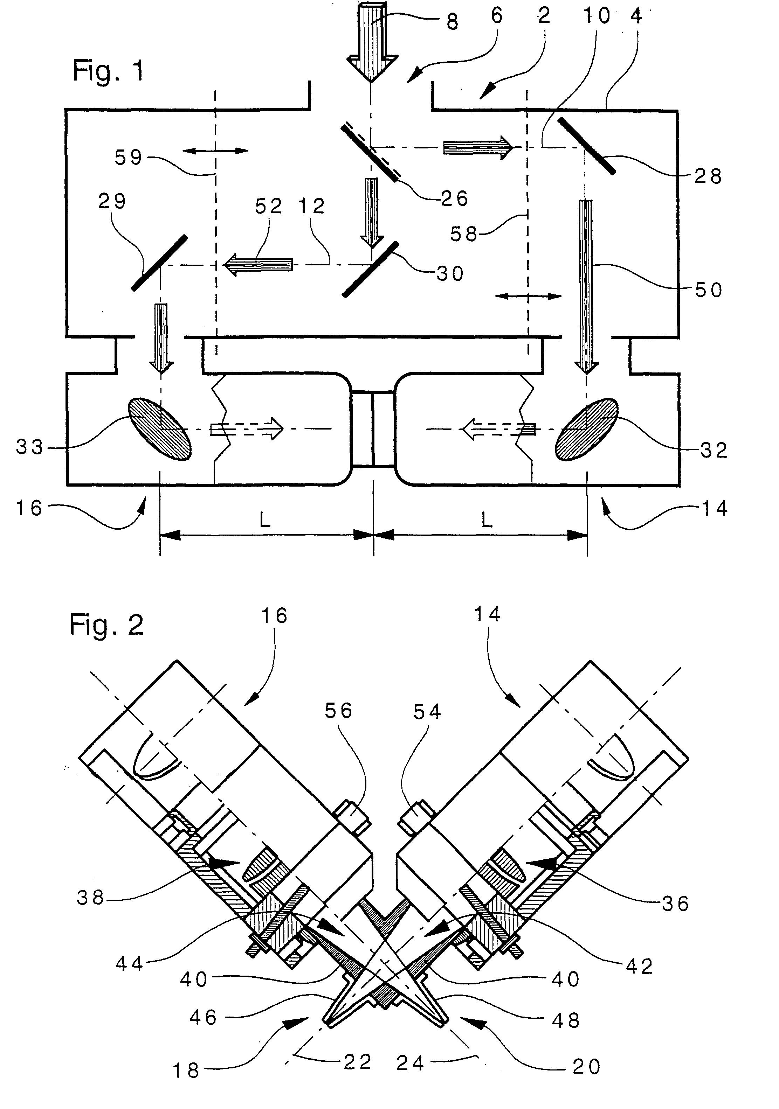

A l'aide des figures 1 et 2, on décrira ci-après un premier mode de réalisation de l'invention.

Le dispositif d'usinage laser 2 comprend un carter frontal 4 avec une entrée 6 pour un faisceau laser 8 fourni par une source laser conventionnelle non représentée. A l'intérieur du carter 4 sont agencés des moyens de guidage optique du faisceau laser entrant 8 de manière à définir des premier et deuxième chemins optiques 10 et 12. Les deux chemins optiques distincts 10 et 12 conduisent de l'entrée 6 à respectivement une première tête d'usinage 14 et une deuxième tête d'usinage 16. Ces première et deuxième têtes d'usinage 14 et 16 sont assemblées au carter frontal 4 par des moyens connus de l'homme du métier de manière que les premier et deuxième chemins optiques sont prolongés respectivement à l'intérieur de ces première et deuxième têtes d'usinage jusqu'aux sorties 18 et 20 de celles-ci. Les première et deuxième têtes sont agencées de manière que les chemins optiques 10 et 12 se prolongeant respectivement dans les têtes 14 et 16 définissent des premier et deuxième axes optiques 22 et 24 qui se croisent et qui définissent ensemble un plan d'usinage du dispositif d'usinage laser selon l'invention.

Les moyens optiques de guidage situés à l'intérieur du carter 4 sont formés d'un premier miroir semi-transparent 26 et de trois miroirs plans 28, 29 et 30. On notera que tout autre moyen optique connu de l'homme du métier peut être utilisé dans le cadre de la présente invention. A l'intérieur de chacune des deux têtes 14 et 16 est prévu un miroir 32, 33 servant à changer la direction du chemin optique 10, 12 sortant du carter 4 selon une direction longitudinale de la tête 14, 16. Les deux directions longitudinales des deux têtes 14 et 16 sont respectivement confondues avec les axes optiques 18 et 20 dans le mode de réalisation décrit ici. Toutefois, cette construction simple et avantageuse n'est nullement limitative.

Les têtes d'usinage 14 et 16 comprennent respectivement des premier et deuxième moyens de focalisation 36 et 38 de faisceaux laser secondaires se propageant respectivement selon les axes optiques 22 et 24. Comme le montre la figure 2, les moyens de focalisation sont agencés de manière que les faisceaux laser secondaires 50 et 52 se propageant respectivement selon les deux chemins optiques 10 et 12 sont focalisés au-delà du croisement des deux axes optiques 22 et 24.

Les deux têtes d'usinage 14 et 16 sont reliées ensemble au moyen d'une pièce terminale commune 40, usinée de manière à définir deux canaux intérieurs 42 et 44 de forme conique. Deux buses 46 et 48 prolongent les deux canaux coniques 42 et 44 de manière que ces buses 46 et 48 et les canaux coniques 42 et 44 ont des axes longitudinaux respectivement confondus entre eux et avec les axes optiques 22 et 24.

Le faisceau laser entrant 8 est divisé en deux faisceaux lasers secondaires 50 et 52 par le miroir semi-transparent 26 servant de diviseur optique. Ainsi, dans la réalisation représentée aux figures 1 et 2, les deux têtes 14 et 16 reçoivent chacune simultanément un faisceau secondaire 50, 52 dont l'intensité est sensiblement égale à la moitié de l'intensité du faisceau laser entrant 8.

Afin de pouvoir injecter conjointement aux faisceaux lasers secondaires un flux de gaz pressurisé aux sorties des deux buses 46 et 48 prévues particulièrement à cet effet, il est prévu des moyens d'introduction d'un gaz dans les canaux 42 et 44, ces moyens étant formés par deux conduits (non représentés) reliant les deux canaux 42 et 44 respectivement à deux embouts 54 et 56.

Sur la figure 1, les deux lignes en traits interrompus 58 et 59 indiquent de manière schématique que la distance L peut être variée selon les besoins d'usinage. En d'autres termes, l'écartement horizontal des deux têtes 14 et 16 est variable. Bien évidemment, pour chaque écartement spécifique est prévue une pièce terminale commune 40 correspondante. Finalement, dans une variante de réalisation, il est possible de prévoir également un réglage de la direction des axes optiques 22 et 24 dans le plan de travail, ce plan étant vertical dans le présent mode de réalisation. Pour ce faire, les têtes 14 et 16 peuvent subir lors du montage ou du réglage de leur position une rotation dans un plan vertical. Ainsi, pour chaque usinage spécifique, le décalage angulaire entre les directions définies par les axes optiques 22 et 24 peut être sélectionné tout comme l'écartement entre les sorties 18, 20 des buses 46 et 48. On remarquera que, étant donné qu'une telle installation est généralement dédiée à une opération d'usinage spécifique déterminée à l'avance, l'écartement entre les têtes d'usinage 14 et 16 et l'orientation de celles-ci dans le plan de travail sont déterminées lors du montage du dispositif selon l'invention.

Sur la figure 2, le carter 4 n'a pas été représenté pour ne pas charger inutilement cette figure.

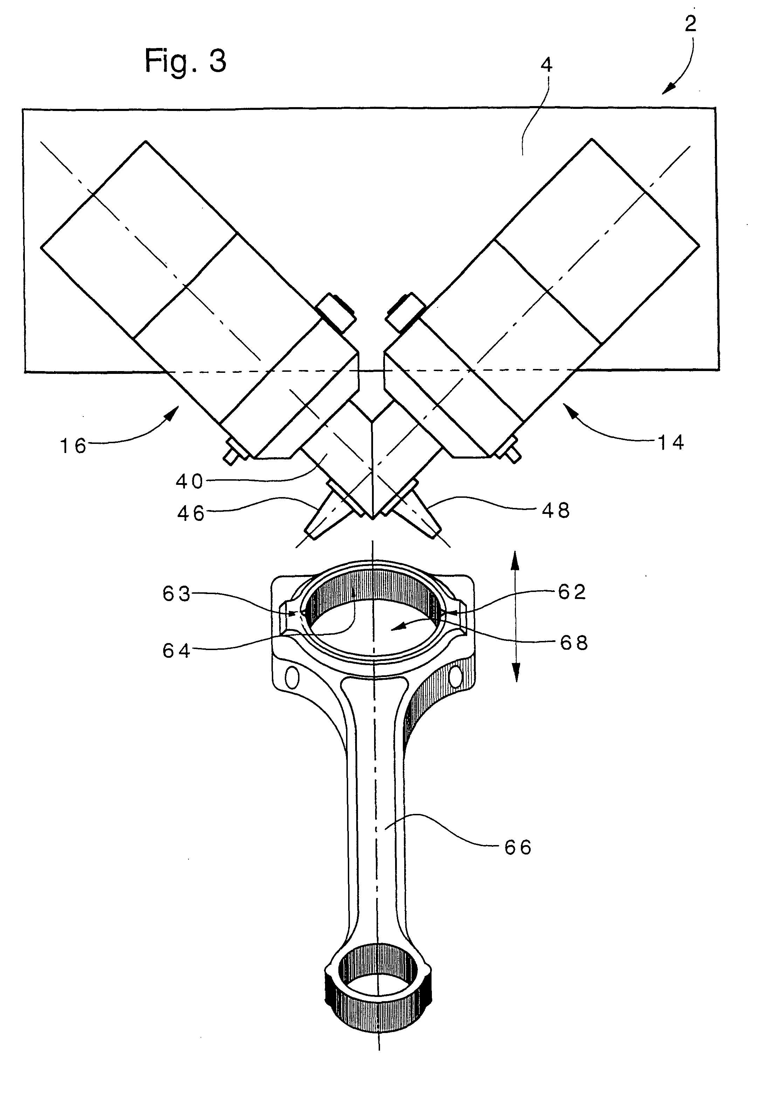

Sur la figure 3 est représenté le dispositif d'usinage laser 2 décrit ci-avant et agencé dans une installation pour l'usinage de bielles, notamment de bielles pour moteur à explosion utilisées dans l'industrie automobile. Les bielles sont formées initialement en une seule pièce de fonte devant être sectionnées selon un plan transversal à l'ouverture 68 prévue pour le montage sur un arbre de transmission. Pour assurer un sectionnement selon un plan déterminé, deux rainures 62 et 63 sont usinées à l'aide de l'installation laser dans la paroi intérieure 64 de la bielle 66. Pour ce faire, le carter 4 et la bielle 66 subissent un déplacement relatif l'un par rapport à l'autre de manière à effectuer l'usinage des rainures 62 et 63. Les moyens de focalisation sont agencés de manière que chacun des deux faisceaux laser secondaires a son plan focal à proximité de la paroi intérieure 64, ce qui est rendu possible par le fait que les deux plans focaux sont situés au-delà du croisement des deux axes optiques définis par les deux têtes 14 et 16, comme le montre les figures 2 et 3. L'usinage des deux rainures peut être effectué par un seul mouvement de translation, de préférence de haut en bas relativement à la bielle 66. Toutefois, il est également possible d'usiner en plusieurs passages si cela est nécessaire et notamment lors du retrait des buses 46 et 48 hors de l'ouverture 68 de la bielle 66.

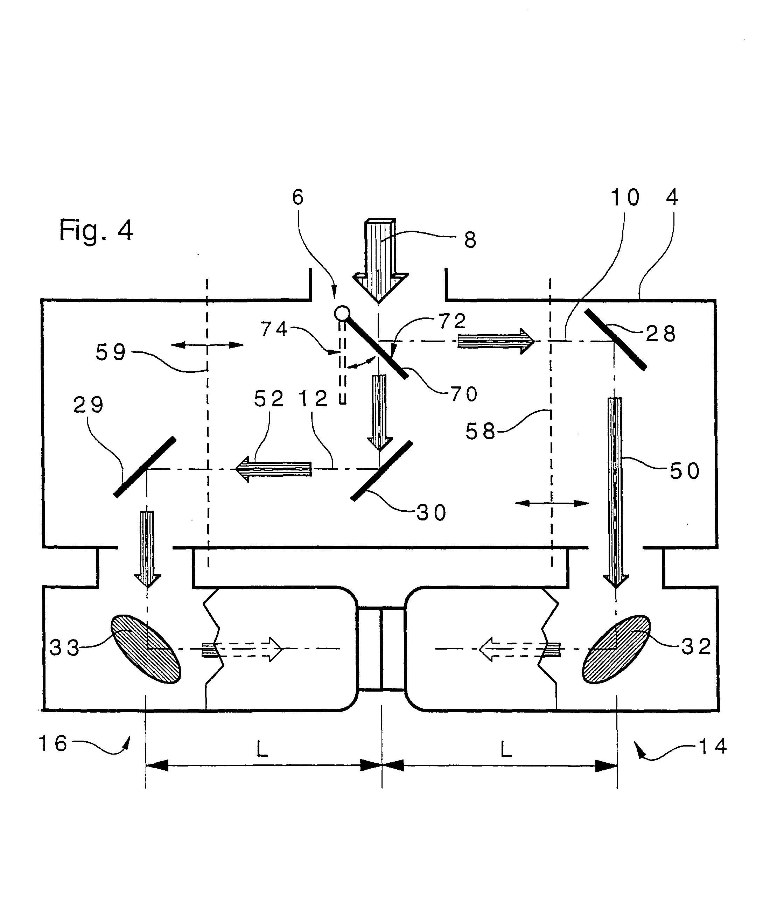

Sur la figure 4 est représentée une variante du premier mode de réalisation selon l'invention. Les références déjà décrites précédemment ne seront pas décrites à nouveau ici en détail. Cette variante de réalisation se distingue du mode de réalisation représenté à la figure 1 en ce que le miroir semi-transparent 26 est remplacé à la figure 4 par un miroir 70 électriquement commutable entre une première position 72 déviant le faisceau laser entrant 8 sur le premier chemin optique 10 et une deuxième position 74 laissant le faisceau laser entrant 8 se propager selon le deuxième chemin optique 12. Ainsi, dans cette réalisation, les têtes d'usinage 14 et 16 peuvent travailler séparément l'une de l'autre dans le temps et notamment en alternance, ce qui peut être avantageux pour certaines applications, notamment par le fait que l'intensité des faisceaux lasers secondaires 50 et 52 ont la même intensité instantanée que le faisceau laser entrant 8.

Cette variante est aussi avantageuse car elle permet de s'affranchir du diamètre de l'ouverture des bielles étant donné que celles-ci peuvent être déplacées dans un plan perpendiculaire au plan de symétrie des deux têtes simultanément à la commutation de miroir 70 entre les deux positions 72 et 74. Ainsi, avec le même dispositif d'usinage, il est possible d'usiner des pièces de dimensions diverses tout en conservant les avantages de la présente invention.

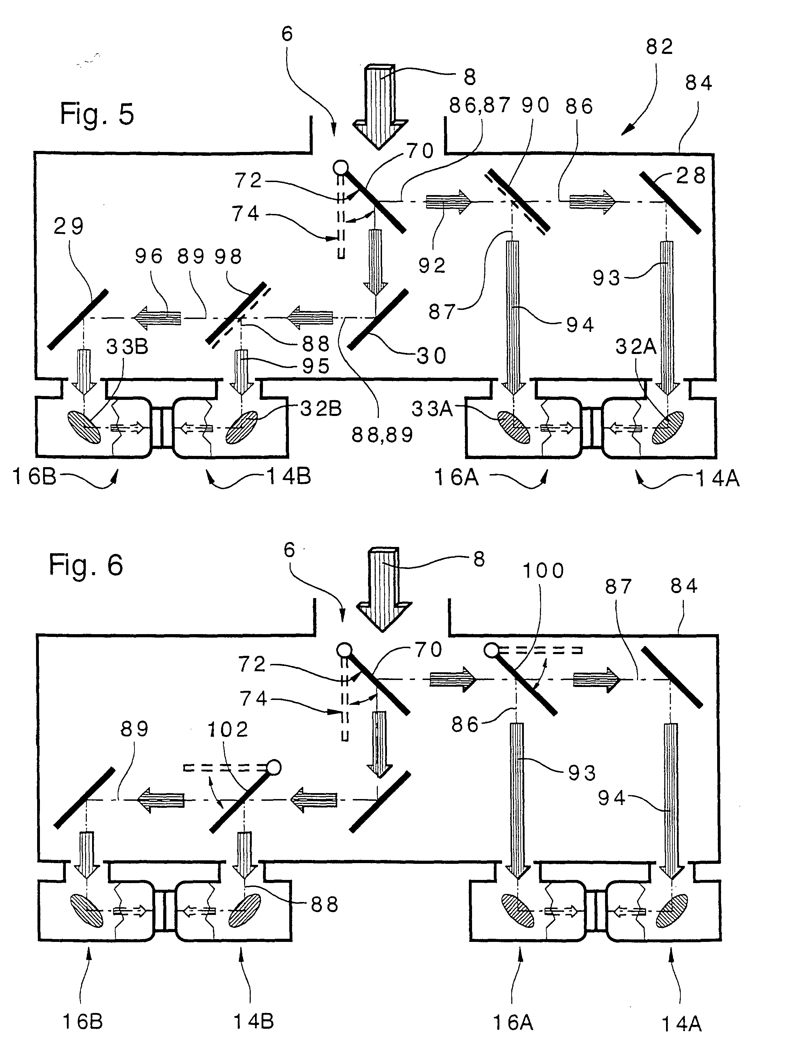

Sur la figure 5 est représenté un deuxième mode de réalisation d'un dispositif d'usinage laser selon l'invention.

Ce dispositif 82 comprend un carter 84 ayant une ouverture d'entrée 6 pour un faisceau laser entrant 8. A l'intérieur du carter 84 sont agencés des moyens de guidage optique définissant quatre chemins optiques 86, 87, 88 et 89 guidant des faisceaux lasers secondaires de ladite entrée 6 à quatre têtes d'usinage 14A, 16A, 14B et 16B. Les têtes 14A et 16A, respectivement 14B et 16B sont identiques aux têtes d'usinage 14 et 16 décrites dans le cadre du premier mode de réalisation. Les deux têtes 14A et 16A forment un premier groupe fonctionnel et les deux têtes 14B et 16B forment un deuxième groupe fonctionnel. Chacun de ces premier et deuxième groupes fonctionnels fonctionne de manière similaire au groupe fonctionnel formé des deux têtes 14 et 16 décrit dans le cadre du premier mode de réalisation. Les deux groupes fonctionnels du présent mode de réalisation permettent un usinage en parallèle de deux pièces, notamment de deux bielles. L'agencement des têtes 14A, 14B, 16A et 16B ne sera pas décrit ici à nouveau étant donné qu'il est similaire à celui décrit ci-avant dans le cadre du premier mode de réalisation.

Les chemins optiques 86 et 87 ont une partie commune entre le miroir électriquement commutable 70 et un miroir semi-transparent 90. Ce miroir 90 divise l'intensité lumineuse du faisceau incident 92 en deux faisceaux secondaires 93 et 94 se propageant respectivement selon les chemins optiques 86 et 87. Les faisceaux secondaires 93 et 94 sont respectivement déviés par des miroirs 32A et 33A selon les axes longitudinaux des deux têtes 14A et 16A. Lorsque le miroir 70 est commuté dans la position 74, le faisceau laser entrant 8 est premièrement dévié par le miroir 30 et est ensuite divisé en deux faisceaux secondaires 95 et 96 par un miroir semi-transparent 98. Le faisceau secondaire 96 est ensuite dévié par le miroir 29 pour entrer dans la tête 16B où il est dévié par le miroir 33B selon l'axe longitudinal de cette tête 16B. Le faisceau secondaire 95 entre dans la tête 14B où il est dévié par le miroir 32B selon l'axe longitudinal de cette tête 14B.

Le dispositif selon le deuxième mode de réalisation décrit ici permet l'usinage en parallèle ou en alternance de manière rapide et efficace de deux pièces, notamment de deux bielles pour moteur.

Sur la figure 6 est représentée une variante de réalisation du deuxième mode de réalisation. Cette variante se distingue de celle de la figure 5 en ce que les miroirs semi-transparents 90 et 98 sont respectivement remplacés par deux miroirs électriquement commutables 100 et 102. Cette variante permet de conduire sélectivement le faisceau laser entrant 8 à l'une des quatre têtes 14A, 16A, 14B et 16B.

Les références de la figure 6 déjà décrites précédemment ne seront pas décrites à nouveau ici.

Dans une autre variante non représentée, le miroir électriquement commutable 70 est remplacé par un miroir semi-transparent divisant le faisceau laser entrant 8 en deux faisceaux secondaires.

Tout en restant dans le cadre de la présente invention, il est possible d'agencer N têtes d'usinage avec N supérieur à 4, et en particulier avec N étant un nombre pair de manière à former N/2 groupes fonctionnels de deux têtes selon l'invention.

## Revendications

1. Dispositif d'usinage laser (2; 82) comprenant un carter frontal (4; 84) agencé pour recevoir à une entrée (6) un faisceau laser (8) fourni par une source laser, des moyens de guidage optique (26, 28, 29, 30; 70; 90, 98) dudit faisceau laser entrant agencés dans ledit carter frontal et définissant des premier et deuxième chemins optiques (10, 12; 86, 87; 88, 89) qui conduisent de ladite entrée à respectivement des première et deuxième têtes d'usinage (14, 16; 14A, 16A; 14B, 16B) assemblées audit carter frontal et agencées de manière que lesdits premier et deuxième chemins optiques sont prolongés respectivement à l'intérieur de ces première et deuxième têtes d'usinage jusqu'aux sorties (18, 20) respectives de celles-ci, lesdits premier et deuxième chemins optiques sortant respectivement desdites première et deuxième têtes d'usinage définissant des premier et deuxième axes optiques (22, 24) qui se croisent et qui définissent ensemble un plan d'usinage, lesdites première et deuxième têtes comprenant des premiers et deuxièmes moyens de focalisation (36, 38) agencés respectivement le long desdits premier et deuxième chemins optiques (10, 12; 86, 87; 88, 89) de manière à focaliser deux faisceaux laser secondaires se propageant respectivement selon lesdits premier et deuxième chemins optiques, **caractérisé en ce que** ledit carter frontal et lesdites première et deuxième têtes d'usinage sont agencés de manière à permettre d'usiner sur sensiblement la totalité de leurs hauteurs respectives des parois internes latérales d'ouvertures présentées par des pièces à usiner, lesdits deux faisceaux laser secondaires étant focalisés respectivement par lesdits premiers et deuxièmes moyens de focalisation au-delà du croisement des premier et deuxième axes optiques pour usiner deux régions diamétralement opposées de la paroi interne latérale d'une même pièce parmi lesdites pièces à usiner.

2. Dispositif selon la revendication 1, **caractérisé en ce que** lesdites première et deuxième têtes sont reliées ensemble par une pièce terminale commune (40) usinée de manière à définir une cavité interne (42, 44) présentant deux ouvertures respectivement prolongées par deux buses (46, 48), lesdits premier et deuxième chemins optiques se croisant à l'intérieur de ladite cavité interne.

3. Dispositif selon la revendication 2, **caractérisé en ce qu'**il est prévu des moyens (54, 56) d'introduction d'un gaz pressurisé dans ladite cavité interne (42, 44) pour engendrer un flux de gaz aux sorties (18, 20) des deux buses (46, 48).

4. Dispositif selon l'une des revendications 1 à 3, **caractérisé en ce que** l'écartement entre les première et deuxième têtes (14, 16; 14A, 16A; 14B, 16B) est réglable.

5. Dispositif selon l'une des revendications 1 à 4, **caractérisé en ce que** lesdites première et deuxième têtes sont agencées de manière à pouvoir définir l'orientation des premier et deuxième axes optiques (22, 24) dans ledit plan d'usinage.

6. Dispositif selon l'une des revendications 1 à 5, **caractérisé en ce qu'**il comporte N têtes d'usinage (14A, 14B, 16A, 16B), N étant un nombre pair supérieur à 2, lesdits moyens de guidage optique définissant N chemins optiques (86, 87, 88, 89) conduisant ledit faisceau laser entrant (8) respectivement de ladite entrée (6) dudit carter frontal (84) auxdites N têtes d'usinage, ces N têtes étant séparées en N/2 groupes fonctionnels de deux têtes d'usinage agencées de manière semblables auxdites première et deuxième têtes (14, 16; 14A, 16A; 14B, 16B).

7. Dispositif selon la revendication 6, **caractérisé en ce que** les longueurs respectives desdits premier et deuxième chemins optiques entre ladite entrée dudit carter frontal et le point de croisement desdits premier et deuxième axes optiques sont différentes.

8. Dispositif selon la revendication 6, **caractérisé en ce que** lesdits moyens de guidage optique sont agencés de manière à conduire ledit faisceau laser entrant (8) sélectivement vers l'un quelconque desdits groupes fonctionnels, chacune des deux têtes (14A, 16A; 14B, 16B) d'un même groupe fonctionnel quelconque recevant à parts sensiblement égales l'intensité lumineuse fournie à ce même groupe fonctionnel.

9. Dispositif selon la revendication 6, **caractérisé en ce que** lesdits moyens de guidage optique sont agencés de manière à conduire ledit faisceau laser entrant (8) sélectivement vers l'une quelconque desdites N têtes d'usinage (14A, 16A, 14B, 16B).

10. Installation pour l'usinage de bielles, **caractérisé en ce qu'**elle comprend un dispositif d'usinage laser selon l'une des revendications 1 à 9 agencé pour usiner deux rainures transversales (62, 63) et diamétralement opposées dans la paroi intérieure (64) d'une ouverture (68) de chaque bielle (66).

## Patentansprüche

1. Laserbearbeitungsvorrichtung (2; 82), die ein stirnseitiges Gehäuse (4; 84), das so beschaffen ist, daß es an einem Eingang (6) ein von einer Laserquelle geliefertes Laserstrahlenbündel (8) empfangen kann, und optische Mittel (26, 28, 29, 30; 70; 90, 98) zum Führen des eintretenden Laserstrahlenbündels umfaßt, die in dem vorderen Gehäuse angeordnet sind und einen ersten und einen zweiten optischen Weg (10, 12; 86, 87; 88, 89) definieren, die von dem Eingang zu einem ersten bzw. zu einem zweiten Bearbeitungskopf (14, 16; 14A, 16A; 14B, 16B) führen, die an das stirnseitige Gehäuse angefügt und so beschaffen sind, daß der erste und der zweite optische Weg in den Innenraum dieses ersten bzw. dieses zweiten Bearbeitungskopfes bis ihren jeweiligen Ausgängen (18, 20) verlängert sind, wobei der erste und der zweite optische Weg aus dem ersten bzw. dem zweiten Bearbeitungskopf austreten und eine erste bzw. eine zweite optische Achse (22, 24) definieren, die sich kreuzen und gemeinsam eine Bearbeitungsebene definieren, wobei der erste und der zweite Kopf erste bzw. zweite Fokussierungsmittel (36, 38) umfassen, die längs des ersten bzw. des zweiten optischen Wegs (10, 12; 86, 87; 88, 89) angeordnet sind, derart, daß zwei sekundäre Laserstrahlenbündel fokussiert werden, die sich längs des ersten bzw. des zweiten optischen Wegs ausbreiten, **dadurch gekennzeichnet, daß** das vordere Gehäuse und der erste und der zweite Bearbeitungskopf so beschaffen sind, daß sie die Bearbeitung von seitlichen Innenwänden von Öffnungen, die zu bearbeitende Teile aufweisen, im wesentlichen über deren gesamte Höhe ermöglichen, wobei die beiden sekundären Laserstrahlenbündel durch die ersten bzw. die zweiten Fokussierungsmittel jenseits der Kreuzung der ersten und der zweiten optischen Achse fokussiert sind, um zwei diametral gegenüberliegende Bereiche der seitlichen Innenwand desselben Teils der zu bearbeitenden Teile zu bearbeiten.

2. Vorrichtung nach Anspruch 1, **dadurch gekennzeichnet, daß** der erste und der zweite Kopf durch ein gemeinsames Endteil (40) miteinander verbunden sind, das so bearbeitet ist, daß ein Innenhohlraum (42, 44) definiert wird, der zwei Öffnungen aufweist, die durch zwei entsprechende Düsen (46, 48) verlängert sind, wobei sich der erste und der zweite optische Weg innerhalb des Innenhohlraums kreuzen.

3. Vorrichtung nach Anspruch 2, **dadurch gekennzeichnet, daß** Mittel (54, 56) für die Einleitung eines mit Druck beaufschlagten Gases in den Innenhohlraum (42, 44) vorgesehen sind, um an den Ausgängen (18, 20) der zwei Düsen (46, 48) einen Gasstrom zu erzeugen.

4. Vorrichtung nach einem der Ansprüche 1 bis 3, **dadurch gekennzeichnet, daß** der Abstand zwischen dem ersten und dem zweiten Kopf (14, 16; 14A, 16A; 14B, 16B) einstellbar ist.

5. Vorrichtung nach einem der Ansprüche 1 bis 4, **dadurch gekennzeichnet, daß** der erste und der zweite Kopf so beschaffen sind, daß sie die Orientierung der ersten bzw. der zweiten optischen Achse (22, 24) in der Bearbeitungsebene definieren können.

6. Vorrichtung nach einem der Ansprüche 1 bis 5, **dadurch gekennzeichnet, daß** sie N Bearbeitungsköpfe (14A, 14B, 16A, 16B) umfaßt, wobei N eine gerade Zahl größer als 2 ist, wobei die optischen Führungsmittel N optische Wege (86, 87, 88, 89) definieren, die das eintretende Laserstrahlenbündel (8) von dem Eingang (6) des vorderen Gehäuses (84) zu den N entsprechenden Bearbeitungsköpfen führen, wobei diese N Köpfe in N/2 funktionale Gruppen aus jeweils zwei Bearbeitungsköpfen unterteilt sind, die so ähnlich wie der erste und der zweite Kopf (14, 16; 14A, 16A; 14B, 16B) beschaffen sind.

7. Vorrichtung nach Anspruch 6, **dadurch gekennzeichnet, daß** die jeweiligen Längen der ersten bzw. zweiten optischen Wege zwischen dem Eingang des vorderen Gehäuses und dem Kreuzungspunkt der ersten und zweiten optischen Achsen unterschiedlich sind.

8. Vorrichtung nach Anspruch 6, **dadurch gekennzeichnet, daß** die optischen Führungsmittel so beschaffen sind, daß sie das eintretende Laserstrahlenbündel (8) wahlweise zu einer der funktionalen Gruppen leiten, wobei jeder der zwei Köpfe (14A, 16A; 14B, 16B) derselben, beliebigen funktionalen Gruppe zu im wesentlichen gleichen Teilen die Lichtstärke, die von dieser funktionalen Gruppe geliefert wird, empfängt.

9. Vorrichtung nach Anspruch 6, **dadurch gekennzeichnet, daß** die optischen Führungsmittel so beschaffen sind, daß sie das eintretende Laserstrahlenbündel (8) wahlweise zu einem der N Bearbeitungsköpfe (14A, 16A, 14B, 16B) leiten.

10. Anlage für die Bearbeitung von Pleueln, **dadurch gekennzeichnet, daß** sie eine Laserbearbeitungsvorrichtung nach einem der Ansprüche 1 bis 9 umfaßt, die so beschaffen ist, daß sie in der Innenwand (64) einer Öffnung (68) jedes Pleuels (66) zwei transversale und diametral gegenüberliegende Nuten ausbilden kann.

## Claims

1. Laser machining device (2; 82) comprising a frontal housing (4; 84) arranged to receive at an input opening (6) a laser beam (8) provided by a laser source, optical guiding means (26, 28, 29, 30; 70; 90, 98) for said incoming laser beam which are arranged in said frontal housing and which define first and second optical paths (10, 12; 86, 87; 88, 89) leading from said input opening respectively to first and second machining heads (14, 16; 14A, 16A; 14B, 16B) fixed to said frontal housing and arranged so that said first and second optical paths are extended respectively within such first and second machining heads up to the respective output openings (18, 20) of the latter, said first and second optical paths respectively exiting said first and second machining heads defining first and second optical axes (22, 24) crossing each other and together defining a machining plane, said first and second machining heads including first and second focussing means (36, 38) respectively arranged along said first and second optical paths (10, 12; 86, 87; 88, 89) so as to focus two secondary laser beams respectively propagating along said first and second optical paths, **characterised in that** said frontal housing and said first and second machining heads are arranged so as to allow machining on substantially the whole of the respective height of the lateral inner walls of openings of parts to be machined, said two secondary laser beams being focussed respectively by said first and second focussing means beyond the intersection of said first and second optical axes to machine two diametrally opposite regions of the lateral inner walls of a same part amongst said parts to be machined.

2. Device according to claim 1, **characterised in that** said first and second heads are connected to each other by a common end piece (40) machined so as to define an internal cavity (42, 44) having two openings which are respectively extended by two nozzles (46, 48), said first and second optical paths crossing inside said internal cavity.

3. Device according to claim 2, **characterised in that** it is provided with means (54, 56) for introducing a pressurised gas into said internal cavity (42, 44) to generate a gas flow at the output openings (18, 20) of the two nozzles (46, 48).

4. Device according to any of claims 1 to 3, **characterised in that** the spacing between said first and second heads (14, 16; 14A, 16A; 14B, 16B) may be adjusted.

5. Device according to any of claims 1 to 4, **characterised in that** said first and second heads are arranged so that the orientation of first and second optical axes (22, 24) in said machining plane can be defined.

6. Device according to any of claims 1 to 5, **characterised in that** it comprises N machining heads (14A, 14B, 16A 16B), N being an even number greater than 2, said optical guiding means defining N optical paths (86, 87, 88, 89) leading said incoming laser beam (8) respectively from said input opening (6) of said frontal housing (84) to said N machining heads, these N heads being separated into N/2 operating groups of two machining heads arranged in a similar manner to said first and second heads (14, 16; 14A, 16A; 14B, 16B).

7. Device according to claim 6, **characterised in that** the respective lengths of said first and second optical paths between said input of said frontal housing and the crossing point of said first and second optical axes are different.

8. Device according to claim 6, **characterised in that** said optical guiding means are arranged so as to lead said incoming laser beam (8) selectively to any one of said operating groups, each of the two heads (14A, 16A; 14B, 16B) of any same operational group receiving in substantially equal parts the luminous intensity provided to this same operating group.

9. Device according to claim 6, **characterised in that** said optical guiding means are arranged so as to lead said incoming laser beam (8) selectively to any one of said N machining heads (14A, 16A; 14B, 16B).

10. Installation for machining connecting rods, **characterised in that** it includes a laser machining device according to one of claims 1 to 9 arranged to machine two transverse diametrically opposite grooves (62, 63) in the inner wall (64) of an opening (68) of each connecting rod (66).
